Europäisches Patentamt

European Patent Office

Office européen des brevets

(19)

(11) Veröffentlichungsnummer: **0 301 192 B1**

# EUROPÄISCHE PATENTSCHRIFT

(12)

(45) Veröffentlichungstag der Patentschrift: **11.03.92**

(51) Int. Cl.⁵: **G01M 17/02**

(21) Anmeldenummer: **88108225.9**

(22) Anmeldetag: **24.05.88**

(54) **Verfahren und Vorrichtung zur Messung des Rundlaufs bei einem Fahrzeugluftreifen.**

(30) Priorität: **25.07.87 DE 3724674**

(43) Veröffentlichungstag der Anmeldung:
**01.02.89 Patentblatt 89/05**

(45) Bekanntmachung des Hinweises auf die
Patenterteilung:
**11.03.92 Patentblatt 92/11**

(84) Benannte Vertragsstaaten:
**AT BE CH DE ES FR GB GR IT LI LU NL SE**

(56) Entgegenhaltungen:
DE-A- 2 536 418     DE-A- 2 552 330
DE-A- 3 246 624     DE-A- 3 534 619
DE-A- 3 541 188     DE-A- 3 604 023
US-A- 4 404 849     US-A- 4 459 167

(73) Patentinhaber: **Continental AG**
**Königsworther Platz 1 Postfach 1 69**
**W-3000 Hannover 1(DE)**

(72) Erfinder: **Birnbach, Alfons**
**Albrecht-Dürer-Strasse 4**
**W-3050 Wunstorf 1(DE)**
Erfinder: **Wedemeyer, Lutz**
**Im Lindhofe 51**
**W-3050 Wunstorf 1(DE)**
Erfinder: **Sergel, Horst**
**Fuchsrain 20 A**
**W-3000 Hannover(DE)**

## Beschreibung

Die Erfindung betrifft ein Verfahren zur Messung des Rundlaufs bei einem Fahrzeugluftreifen, der im Betriebszustand mit seinen Wülsten am radial inneren Umfang einer Felge befestigt ist, sowie eine Vorrichung zur Durchführung der Verfahren.

Ein Fahrzeugluftreifen dieser Art wird z. B. in der DE-OS 32 46 624 beschrieben. Die Rundlaufmessungen wurden bei einem solchen Reifen bisher ausschließlich in der Betriebsstellung des Reifens durchgeführt. In der DE-OS 35 41 188 wird eine recht aufwendige Vorrichtung zur Durchführung derartiger Messungen vorgeschlagen. Die bekannte Vorrichtung weist eine Meßfelge mit zwei axial verschiebbaren scheibenförmigen Trägern auf, von denen jeder aus mehreren radial verschiebbaren Felgensegmenten aufgebaut ist.

In der älteren Patentanmeldung P 36 04 023.1 wird bereits vorgeschlagen, die Rundlaufmessung am Reifen mit seitlich nach außen geklappten Seitenwänden und Wülsten des Reifens durchzuführen. Die weitere Entwicklung hat jedoch gezeigt, daß die erhaltenen Meßergebnisse in nicht unerheblichem Maße davon abhängen, mit welcher Querschnittskontur die Messungen durchgeführt wurden. Daraus resultiert auch eine mehr oder weniger große Abweichung von Meßergebnissen am selben Reifen, die auf einer Normalfelge durchgeführt worden sind, d. h. auf einer Felge, auf der der Reifen in einer Querschnittskontur entsprechend seiner Betriebsstellung aufgespannt war.

Der Erfindung liegt deshalb die Aufgabe zugrunde, ein verbessertes Verfahren zur Rundlaufmessung und eine dafür geeignete Vorrichtung anzugeben, um die Messung bei einer vorbestimmten Reifenkontur mit um ein bestimmtes Maß nach seitlich außen geklappten Seitenwänden durchführen zu können, um die Korrelation zu Rundlaufmessungen auf einer Normalfelge zu verbessern.

Diese Aufgabe wird erfindungsgemäß dadurch gelöst, daß die Rundlaufmessung am Reifen mit seitlich nach außen geklappten Seitenwänden und Wülsten des Reifens durchgeführt wird und daß bei der Rundlaufmessung eine einstellbare Axialkraft an den Reifenwülsten eingeleitet wird, die gleich dem Produkt aus der in radialer Richtung projizierten Ringfläche von Wulstaufnahmeringen und dem im Prüfraum herrschenden Luftdruck ist. Eine Vorrichtung zur Durchführung des Verfahrens ist dadurch gekennzeichnet, daß die Wulstaufnahmeringe Anlageflächen für den Reifen aufweisen, die in der Meßstellung mit den Sitzflächen der Reifenwülste in Eingriff stehen, und daß die Wulstaufnahmeringe weiterhin mit je einer vorstehenden Rippe versehen sind, die in den hinterschnittenen Raum hinter jedem Reifenwulst eintaucht, und daß der eine Wulstaufnahmering auf einer Welle befestigt ist, während der andere auf ihr frei verschiebbar ist.

Die Erfindung bietet vor allem den Vorteil, daß man mit Hilfe preiswerter Meßvorrichtungen für jeden Reifentyp das Rundlaufmeßverfahren anwenden kann, bei dem sich eine optimale Korrelation zu den Messungen auf einer Normalfelge ergibt. Als weiterer Vorteil ist die einfache Montage eines Reifens der eingangs genannten Art auf einer Rundlaufmeßvorrichtung zu nennen.

Mit Hilfe der erfindungsgemäßen Vorrichtung werden die Rundlaufmessungen an den neuartigen Reifen automatisierbar. Unter Rundlauf soll im Rahmen dieser Anmeldung ganz allgemein die statische und dynamische Gleichmäßigkeit eines Reifens verstanden werden. Zur Ermittlung des Rundlaufs sind insbesondere der Höhenschlag, der Seitenschlag, die Radialkraftschwankungen und die Seitenkraftschwankungen sowie die Konizität bei einem Reifen zu messen.

Mit der Erfindung werden die Vorteile eines optimalen Sitzes des zu prüfenden Reifens und eines Schnellwechsels erzielt, was insbesondere für eine hundertprozentige Prüfung von Bedeutung ist. Weiterhin läßt sich die Erfindung außer für Rundlaufmessungen in vorteilhafter Weise auch noch für andere Zwecke einsetzen. Die erfindungsgemäße Vorrichtung ist besonders gut zur Durchführung des Harmonisierens geeignet, z. B. durch Abschleifen eines Höhenschlags. Schließlich lassen sich mit ihr Reifeninspektionen unterschiedlichster Art sowie Untersuchungen mit Röntgenstrahlen und Holographie durchführen. Nachfolgend wird das erfindungsgemäße Verfahren und ein Ausführungsbeispiel einer erfindungsgemäßen Vorrichtung anhand einer Zeichnung erläutert. Es zeigt schematisch

Fig. 1    eine Vorrichtung mit einem frei verschiebbaren Wulstaufnahmering auf einer Welle und mit einem Fahrzeugluftreifen in Meßstellung in einem radialen Teilschnitt,

Fig. 2    eine Vorrichtung gemäß Fig. 1, bei der jedoch der Außendurchmesser der Welle und entsprechend der Innendurchmesser der Wulstaufnahmeringe vergrößert sind,

Fig. 3    eine Vorrichtung, bei der die Wülste eines zu messenden Reifens zusätzlich von außen klemmbar sind und bei der in der Meßstellung beide Wulstaufnahmeringe mit einem Außenanschlag versehen sind, in einem radialen Teilschnitt,

Fig. 4    eine Vorrichtung mit zwei Wulstaufnahmeringen, die jeweils an einer axial verschiebbaren Welle fest montiert sind.

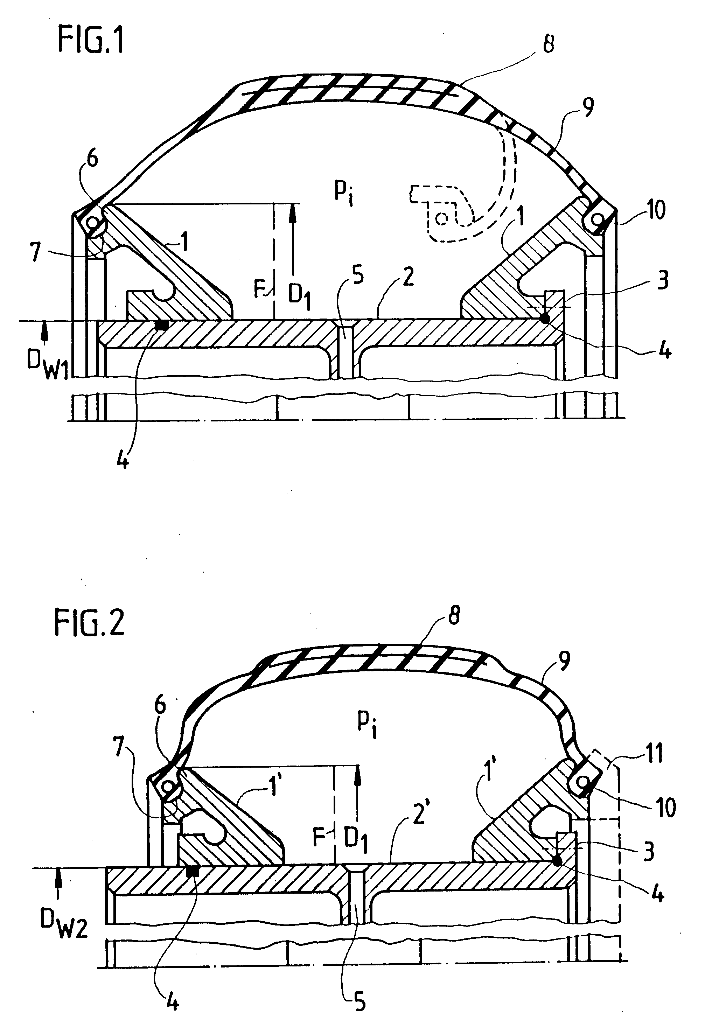

Die in Fig. 1 dargestellte Vorrichtung weist eine Meßfelge aus zwei Wulstaufnahmeringen 1 auf, die als Kreisringscheiben ausgebildet sind und sich auf einer Welle 2 befinden. Dabei ist der rechte Wulstaufnahmering 1 fest mit einem Anschlag 3 der Welle 2 verbunden. Der linke Wulstaufnahmering 1 ist dagegen frei auf der Welle 2 verschiebbar. Übliche Dichtringe 4 aus Gummi gewährleisten eine Luftdichtigkeit zwischen den Wulstaufnahmeringen 1 und der Welle 2. Eine Öffnung 5 in der Welle 2 dient der Zufuhr von Druckluft. Jeder der Wulstaufnahmeringe 1 ist radial und axial außen mit einer umlaufenden vorstehenden Rippe 6 versehen, die zum Erfassen eines Reifens in der Nachbarschaft eines Reifenwulstes dient. Auf der axial äußeren Seite eines jeden Wulstaufnahmerings 1 schließt sich nach radial innen hin eine Anlagefläche 7 an, die in der Meßstellung der Vorrichtung mit der Sitzfläche des Reifenwulstes in Eingriff steht. Die Außendurchmesser $D_1$ der Wulstformringe 1 und $D_{W1}$ der Welle 2 sind derart gewählt, daß das Verhältnis $D_1$ zu $D_{W1}$ Werte von ungefähr 1 bis 10 annehmen kann. Die Rundlaufmessung wird mit einem Luftinnendruck $p_i$ durchgeführt, der zwischen 0,5 und 7 bar, bevorzugt bei etwa 3 bar liegt.

Mit den vorstehenden Bezeichnungen läßt sich die Fläche der Wulstaufnahmeringe 1, auf die der Luftinnendruck $p_i$ wirkt, leicht angeben. Aus der Formel für den Flächeninhalt eines Kreises $F = \pi r^2$ ergibt sich unmittelbar für die Kreisscheibenfläche der Wulstaufnahmeringe 1 $F = \frac{\pi}{4}(D_1{}^2 - D_{W1}{}^2)$ und somit für die Kraft K, die der Luftinnendruck $p_i$ auf die Wulstaufnahmeringe 1 ausübt, der Wert $K = F \times P_i$.

Nachfolgend wird das erfindungsgemäße Verfahren beschrieben. Dabei wird von einem Zustand der Vorrichtung ausgegangen, in dem die Wulstaufnahmeringe 1 durch Heranfahren des linken an den rechten zusammengefahren sind. Ein zu prüfender Reifen 8 wird durch bekannte Mittel in einer Stellung mit seitlich nach außen geklappten Seitenwänden 9 und Wülsten 10 gehalten. (Zum Vergleich ist rechts in der Fig. 1 die Betriebsstellung des Reifens 8 gestrichelt dargestellt). Die Wulstaufnahmeringe 1 der Meßfelge werden in den Innenraum des Reifens 8 gebracht, indem der eine Reifenwulst 10 geringfügig oval verformt wird und der Reifen zunächst im wesentlichen senkrecht zur Meßfelge gestellt wird. Nachdem sich die Wulstaufnahmeringe 1 im Innenraum des Reifens befinden, wird der Reifen geschwenkt, so daß seine Drehachse parallel zur Welle 2 verläuft. Nunmehr wird der linke Wulstaufnahmering 1 nach axial außen verfahren, bis die Anlageflächen 7 und die Rippen 3 die Reifenwülste 10 erfassen. Danach wird der Reifeninnenraum über die Öffnung 5 mit Druckluft gefüllt,

bis ein Luftdruck $p_1$ von ca. 3 bar vorherrscht. Da der linke Wulstaufnahmering 1 frei verschiebbar ist und da die in radialer Richtung projizierte Ringfläche F der Wulstaufnahmeringe vorgegeben ist, wird an den Reifenwülste 10 unter diesen Bedingungen eine Axialkraft $K = F \times p_i$ eingeleitet. Genau unter diesen Bedingungen werden anschließend die Rundlaufmessungen durchgeführt, so daß sich eine ganz bestimmte Querschnittskontur am Reifen frei einstellt, die von den Größen F, $p_i$ und dem inneren Aufbau des Reifens 8 abhängt, der mit seinen Festigkeitsträgern eine Gegenkraft erzeugt. Da der Gürtel des Reifens kaum verformbar ist, bestimmt die Größe K das Maß, um das die Wülste 10 nach seitlich außen gedrückt werden und um das die Seitenwände 9 nach außen ausgewölbt werden.

Die Vorrichtung der Fig. 2 unterscheidet sich von der der Fig. 1 lediglich dadurch, daß die Wulstaufnahmeringe 1' mit einem identischen Durchmesser $D_1$ auf einer Welle 2' mit einem größeren Durchmesser $D_{W2}$ montiert sind, so daß sich gegenüber der Vorrichtung gemäß Fig. 1 kleinere Flächen F ergeben und damit bei gleichem Luftinnendruck $p_i$ kleinere Axialkräfte K, die während der Rundlaufmessung in die Reifenwülste 10 eingeleitet werden. Demzufolge wird sich beim Beispiel der Fig. 2 eine Reifenquerschnittskontur einstellen, bei der die Reifenwülste 10 und die Seitenwände 9 weniger weit nach seitlich außen geklappt sind. Bei Bedarf kann man zur Verbesserung der Meßresultate die Reifenwülste 10 zusätzlich mit Hilfe von Klemmringen 11 (gestrichelt gezeichnet) von außen umfassen, die an den Wulstaufnahmeringen 1' befestigt sein können. Ansonsten ist das Meßverfahren mit einer Vorrichtung gemäß Fig. 2 identisch mit dem der Fig. 1.

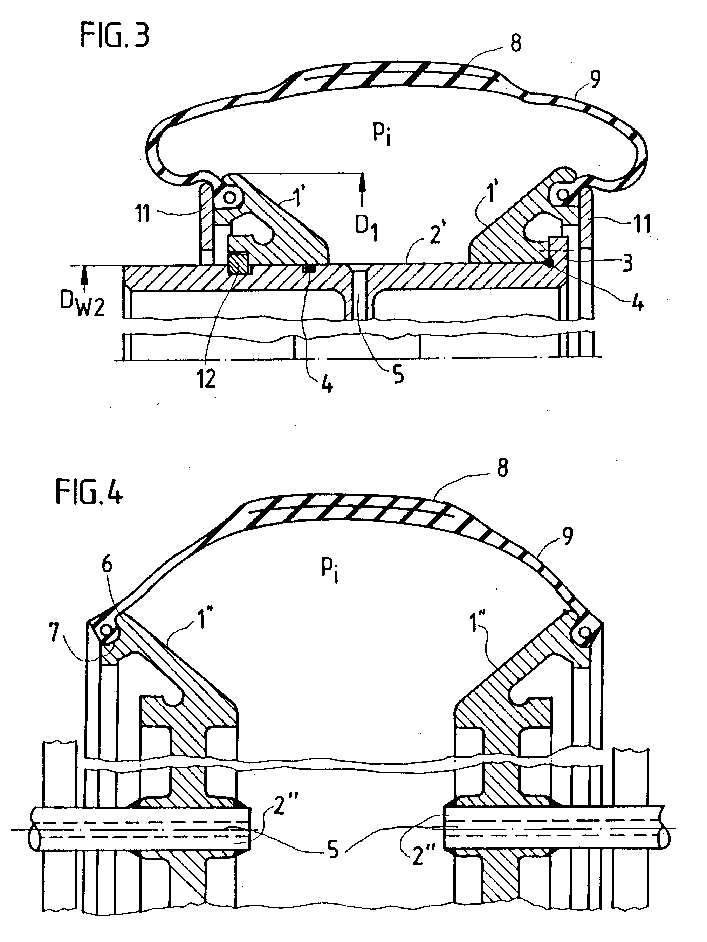

Fig. 3 zeigt eine Rundlaufmeßvorrichtung, bei der die Wulstaufnahmeringe 1' sowie die Welle 2' gleiche Abmessungen aufweisen wie beim Beispiel der Fig. 2. Der wesentliche Unterschied besteht jedoch darin, daß beide Reifenwülste 10 während der Rundlaufmessung zusätzlich zwingend von äußeren Klemmringen 11 umfaßt werden und daß weiterhin an der Welle 2' ein Anschlagring 12 vorgesehen ist, der während der Rundlaufmessung die freie Axialverschiebbarkeit des linken Wulstaufnahmerings 1' aufhebt, so daß der Rundlauf am Reifen 8 gleichsam in einer Zwangskontur mit stärker angenäherten Reifenwülsten 10 gemessen wird.

Die Vorrichtung der Fig. 4 unterscheidet sich von den vorstehend beschriebenen dadurch, daß zwei Wulstaufnahmeringe 1'' sich nicht mehr auf einer gemeinsamen Welle befinden, sondern daß jeder von ihnen auf einer eigenen Welle 2'' fest montiert, z. B. angeschweißt ist. Dabei steht es einem frei, die Vorrichtung so auszubilden, daß nach einem Meßverfahren gemäß den Beispielen 1 und 2 gemessen wird, d. h. mit zumindest einem frei verschiebbaren Wulstaufnahmering 1″, so daß sich während der Rundlaufmessung ein Kräftegleichgewicht einstellen kann, oder aber so, daß die Wulstaufnahmeringe 1″ während der Rundlaufmessung einer Zwangsführung unterliegen wie beim Beispiel der Fig. 3.

Mit Hilfe der vorstehend beschriebenen Verfahren und Vorrichtungen ist es möglich, für einen bestimmten Reifentyp das Verfahren auszuwählen, bei dem eine optimale Korrelation zu den Meßergebnissen erhalten wird, die sich bei einer Rundlaufmessung auf einer Normalfelge ergeben.

**Patentansprüche**

1.  Verfahren zur Messung des Rundlaufs bei ei-nem Fahrzeugluftreifen, der im Betriebszu-stand mit seinen Wülsten am radial inneren Umfang einer Felge befestigt ist, **dadurch gekennzeichnet,** daß die Rundlaufmessung am Reifen mit seitlich nach außen geklappten Seitenwänden und Wülsten des Reifens durchgeführt wird und daß bei der Rundlaufmessung eine einstellbare Axialkraft an den Reifenwülsten eingeleitet wird, die gleich dem Produkt aus der in radialer Richtung projizierten Ringfläche von Wulstaufnahmeringen und dem im Prüfraum herrschenden Luftdruck ist.

2.  Verfahren nach Anspruch 1, dadurch gekennzeichnet, daß die Rundlaufmessung bei einem Luftdruck durchgeführt wird, der zwischen 0,5 und 7 bar liegt.

3.  Vorrichtung zur Durchführung des Verfahrens zur Messung des Rundlaufs bei einem Fahrzeugluftreifen, der im Betriebszustand mit seinen Wülsten am radial inneren Umfang einer Felge befestigt ist, nach Anspruch 1, gekennzeichnet durch eine Meßfelge mit zwei Wulstaufnahmeringen (1, 1′, 1″), die in axialer Richtung relativ zueinander verschiebbar sind und von denen zumindest einer auch während der Rundlaufmessung frei verschiebbar ist.

4.  Vorrichtung nach Anspruch 3, dadurch gekennzeichnet, daß die Wulstaufnahmeringe (1, 1′) Anlageflächen (7) für den Reifen (8) aufweisen, die in der Meßstellung mit den Sitzflächen der Reifenwülste (10) in Eingriff stehen, und daß die Wulstaufnahmeringe (1, 1′) weiterhin mit je einer vorstehenden Rippe (6) versehen sind, die in den hinterschnittenen Raum hinter jedem Reifenwulst (10) eintaucht, und daß der eine Wulstaufnahmering (1, 1′) auf einer Welle (2, 2′) befestigt ist, während der andere auf ihr frei verschiebbar ist.

5.  Vorrichtung nach Anspruch 3 oder 4, dadurch gekennzeichnet, daß der Außendurchmesser ($D_1$) der Wulstaufnahmeringe (1, 1′) etwa ein bis zehnmal so groß ist wie der Durchmesser ($D_{W1}$, $D_{W2}$) der Welle (2, 2′).

6.  Vorrichtung nach Anspruch 3 oder 4, gekennzeichnet durch eine Meßfelge mit zwei Klemmringen (11), die die Wülste des Reifens zusätzlich von außen umfassen.

**Claims**

1.  Method of measuring the concentricity of a pneumatic vehicle tyre, which is secured by its beads on the radially inner circumference of a rim in the operational state, characterised in that the concentricity is measured on the tyre when the side walls and beads of the tyre are tilted laterally outwardly, and in that, for the measurement of the concentricity, an adjustable axial force is introduced at the tyre beads, which force is equal to the product of the radially extending annular face of bead receiving rings and the air pressure prevailing in the testing area.

2.  Method according to claim 1, characterised in that the concentricity is measured at an air pressure of between 0.5 and 7 bars.

3.  Device for effecting the method of measuring the concentricity of a pneumatic vehicle tyre, which is secured by its beads on the radially inner circumference of a rim in the operational state, in accordance with claim 1, characterised by a measuring rim having two bead receiving rings (1, 1', 1"), which are displaceable in an axial direction relative to each other, at least one of said rings also being freely displaceable during the measurement of the concentricity.

4.  Device according to claim 3, characterised in that the bead receiving rings (1, 1') have contact surfaces (7) for the tyre (8), which surfaces engage with the seating surfaces of the tyre beads (10) in the measuring position, and in that the bead receiving rings (1, 1') are each additionally provided with a protruding rib (6), which extends into the tapering area behind each tyre bead (10), and in that one bead receiving ring (1, 1') is secured on a shaft (2, 2'), while the other bead receiving ring is freely displaceable on said shaft.

5.  Device according to claim 3 or 4, characterised in that the external diameter ($D_1$) of the bead receiving rings (1, 1') is approximately one to ten times larger than the diameter ($D_{W1}$, $D_{W2}$) of the shaft (2, 2').

**6.** Device according to claim 3 or 4, characterised by a measuring rim having two clamping rings (11), which surround the beads of the tyre additionally from externally.

**Revendications**

**1.** Procédé de mesure de l'excentricité d'un pneu de véhicule automobile qui, à l'état de fonctionnement, est fixé par ses talons sur le pourtour radialement intérieur d'une jante, caractérisé en ce que la mesure de l'excentricité s'effectue sur le pneu avec les flancs et les talons du pneu rabattus latéralement vers l'extérieur et en ce que pendant la mesure de l'excentricité une force axiale réglable est transmise aux talons du pneu, laquelle force est égale au produit de la surface annulaire, projetée en direction radiale, d'anneaux de logement de talon par la pression de l'air contenu dans le volume d'essai.

**2.** Procédé selon la revendication 1, caractérisé en ce que le mesure d'excentricité s'effectue sous une pression d'air comprise entre 0,5 et 7 bar.

**3.** Dispositif pour la mise en oeuvre du procédé de mesure de l'excentricité d'un pneu de véhicule automobile qui, a l'état de fonctionnement, est fixé par ses talons sur le pourtour radialement intérieur d'une jante, caractérisé par une jante de mesure comportant deux anneaux de logement de talon (1, 1', 1") qui sont déplaçables l'un par rapport à l'autre dans la direction axiale et dont un au moins est librement déplaçable aussi pendant la mesure d'excentricité.

**4.** Dispositif selon la revendication 3, caractérisé en ce que les anneaux de logement de talon (1, 1') comportent des surfaces d'application (7) pour le pneu (8), qui, en position de mesure, sont en prise avec les surfaces portantes des talons de pneu (10) et en se que les anneaux de logement de talon (1, 1') sont pourvus en outre chacun d'une nervure (6) saillante qui s'engage dans l'espace détalonné derrière chaque talon de pneu (10) et en ce qu'un anneau de logement de talon (1, 1') est fixé sur un arbre (2, 2'), tandis que l'autre est librement déplaçable sur celui-ci.

**5.** Dispositif selon la revendication 3 ou 4, caractérisé en ce que le diamètre extérieur ($D_1$) des anneaux de logement de talon (1, 1') est de une à dix fois plus grand que le diamètre ($D_{W1}$, $D_{W2}$) de l'arbre (2, 2').

**6.** Dispositif selon la revendication 3 ou 4, caractérisé par une jante de mesure comportant deux anneaux de serrage (11) qui entourent en plus de l'extérieur les talons du pneu.

FIG.1

FIG.2

FIG.3

FIG.4